# EUROPEAN PATENT APPLICATION

(11) **EP 4 312 293 A1**
(43) Date of publication of application: **31.01.2024**
(21) Application number: 23187685.5
(22) Date of filing: 25.07.2023
(51) Int. Cl.: H01M 10/04, H01M 50/105

(54) **FOLDING PROCESSING APPARATUS FOR SEALING PART OF BATTERY CELL, BATTERY CELL MANUFACTURING APPARATUS AND METHOD**

(30) Priority: 26.07.2022 KR 20220092576
(71) Applicant: SK On Co., Ltd., Seoul 03161 (KR)
(72) Inventor: CHOI, Gil Yong, 34124 Daejeon (KR); KIM, Joo Hyung, 34124 Daejeon (KR); SHIN, Dong Whan, 34124 Daejeon (KR); LEE, Da Young, 34124 Daejeon (KR); KIM, Hyung Joon, 34124 Daejeon (KR)
(74) Representative: Stolmár & Partner Patentanwälte PartG mbB

(57) **Abstract**

A folding processing apparatus for battery cells includes a folding tool assembly including a first folding processing tool configured to fold a sealing portion of a first battery cell when the folding tool assembly is transferred forward in a first direction, a second folding processing tool disposed offset from the first folding processing tool and configured to fold a sealing portion of a second battery cell when the folding tool assembly is transferred in a reverse direction opposite to the first direction, and a mounting plate on which the first folding processing tool and the second folding processing tool are mounted; and an assembly transferring tool configured to transfer the folding tool assembly.

## Description

### TECHNICAL FIELD

The present disclosure relates to a folding processing apparatus for folding a sealing portion of a pouch-type battery cell, and a battery cell manufacturing apparatus and method including the same.

### BACKGROUND

Unlike primary batteries, secondary batteries may be charged and discharged, and thus, may be applied to devices within various fields such as for example digital cameras, mobile phones, laptop computers, hybrid vehicles, and electric vehicles. Examples of the secondary batteries include a nickel-cadmium battery, a nickel-metal hydride battery, a nickel-hydrogen battery, a lithium secondary battery, etc.

Among such secondary batteries, many studies are being conducted on lithium secondary batteries having high energy density and discharge voltage. Recently, the lithium secondary battery has been manufactured as a pouch-type battery cell having flexibility or as a prismatic or cylindrical can type battery cell having rigidity.

For such battery cells, in the pouch-type battery cell, a space for accommodating an electrode assembly is formed in a film casing and at least a portion of a circumference of the electrode assembly is sealed to form a sealing portion. An electrode lead is connected to the electrode assembly, and the electrode lead is exposed externally through the sealing portion. For the sealing portions, the sealing portion where the electrode lead is not disposed is folded to increase sealing reliability and to minimize a volume occupied by the sealing portion.

The conventional folding processing apparatus for a sealing portion transfers a plurality of battery cells through a cell transfer device such as a conveyor. The battery cells transferred by the cell transfer device are subjected to a folding processing while passing through a folding device typically comprised of folding rollers and the like. The folding device has a fixed position, and the sealing portion is folded while the battery cells are transferred by the cell transfer device and pass through the folding processing device.

### SUMMARY

One aspect of the present disclosure may provide a folding processing apparatus for a sealing portion of a battery cell capable of rapidly folding a sealing portion of a pouch-type battery cell and reducing a manufacturing time of the battery cell, and a battery cell manufacturing apparatus and method including the same.

According to another aspect of the present disclosure, a folding processing apparatus for battery cells includes a folding tool assembly including a first folding processing tool configured to fold a sealing portion of a first battery cell when the folding tool assembly is transferred forward in a first direction, a second folding processing tool disposed offset from the first folding processing tool and configured to fold a sealing portion of a second battery cell when the folding tool assembly is transferred in a reverse direction opposite to the first direction, and a mounting plate on which the first folding processing tool and the second folding processing tool are mounted; and an assembly transferring tool configured to transfer the folding tool assembly.

The first folding processing tool and the second folding processing tool may be disposed on the mounting plate offset from each other in a second direction perpendicular to the first direction, and a transfer space in which the battery cell is movable exist between the first folding processing tool and the second folding processing tool.

The first folding processing tool may include a first folding tool configured to fold the sealing portion of the first battery cell at a preset angle when the first folding processing tool is transferred forward in the first direction, and the second folding processing tool includes a second folding tool configured to fold the sealing portion of the second battery cell at the preset angle when the second folding processing tool is transferred in the reverse direction.

The first folding tool may include a plurality of first roller pairs that are disposed in pairs opposite to each other in the second direction and gradually change a folding angle of the battery cell, and the second folding tool may include a plurality of second roller pairs that are disposed in pairs opposite to each other in the second direction and gradually change the folding angle of the battery cell.

Each of the first roller pairs may include a first roller and a second roller disposed opposite to each other in the second direction, and each of the second roller pairs may include a third roller and a fourth roller disposed opposite to each other in the second direction.

The first folding processing tool may further include a first guiding tool that is disposed at a tip of the first folding tool in the forward direction to guide the sealing portion of the first battery cell to the first folding tool, and the second folding processing tool may further include a second guiding tool that is disposed at a tip of the second folding tool in the reverse direction to guide the sealing portion of the second battery cell to the second folding tool.

The assembly transferring tool may include a first transferring tool transferring the folding tool assembly in the first direction and a second transferring tool transferring the folding tool assembly in the second direction.

The folding tool assembly may be mounted on the second transferring tool, the second transferring tool may be mounted on the first transferring tool, and the first transferring tool may simultaneously transfer the folding tool assembly and the second transferring tool in the first direction.

The assembly transferring tool may further include a third transferring tool configured to transfer the folding tool assembly in a third direction perpendicular to the first and second directions, respectively.

The third transferring tool may simultaneously transfer the folding tool assembly , the first transferring tool, and the second transferring tool in the third direction.

According to another aspect of the present disclosure, a battery cell manufacturing apparatus includes: at least one folding processing apparatus including a folding tool assembly configured to fold a sealing portion of a battery cell and an assembly transferring tool configured to transfer the folding tool assembly; and a cell transfer device configured to transfer a plurality of battery cells in a first direction, wherein the folding tool assembly includes a first folding processing tool configured to fold a sealing portion of a first battery cell when the folding tool assembly is transferred forward in a first direction, a second folding processing tool configured to fold a sealing portion of a second battery cell when the folding tool assembly cell is transferred in a reverse direction opposite to the first direction, and a mounting plate on which the first folding processing tool and the second folding processing tool are mounted.

The first folding processing tool and the second folding processing tool may be disposed on the mounting plate offset from each other in a second direction perpendicular to the first direction, and a transfer space in which the battery cell is movable may exist between the first folding processing tool and the second folding processing tool.

The folding tool assembly may be configured to transfer in the first direction or the reverse direction in a state in which the cell transfer device is stopped.

The folding tool assembly may be transferable in the second direction so that the first folding processing tool is disposed in a first folding position corresponding to a transfer area in which the first battery cell is transferred or the second folding processing tool is disposed at a second folding position corresponding to the transfer area, the folding tool assembly may be configured to fold the sealing portion of the first battery cell by the first folding processing tool while the folding tool assembly is transferred from an initial position forward in the first direction in the first folding position, and the folding tool assembly may be configured to fold a sealing portion of the second battery cell subsequent to the first battery cell while the folding tool assembly is transferred in the reverse direction and returned to the initial position.

The folding tool assembly may be transferable in the second direction so that the transfer space is disposed at a transfer position corresponding to a transfer area in which the second battery cell is transferred, and the cell transfer device may be configured to transfer the second battery cell in a state in which the folding tool assembly is disposed at the transfer position.

The folding processing apparatus may be disposed on both sides of the battery cell, respectively, based on a transfer direction of the battery cell.

According to still another aspect of the present disclosure, a battery cell manufacturing method includes: folding a sealing portion of a first battery cell while transferring a folding tool assembly from an initial position forward in a first direction in a state in which a transfer of the first battery cell is stopped; transferring the first battery cell and a second battery cell subsequent to the first battery cell forward in the first direction; folding a sealing portion of the second battery cell while transferring the folding tool assembly in a reverse direction opposite to the first direction from the second folding position and returning to the initial position in a state in which a transfer of the second battery cell is stopped; and subsequently transferring the second battery cell forward in the first direction.

The folding tool assembly may include a first folding processing tool which folds the sealing portion of the battery cell when the folding tool assembly is transferred forward in the first direction, a second folding processing tool which folds the sealing portion of the battery cell when the folding tool assembly is transferred in the reverse direction opposite to the first direction, and a mounting plate on which the first folding processing tool and the second folding processing tool are mounted, the first folding processing tool and the second folding processing tool are disposed on the mounting plate offset from each other in a second direction perpendicular to the first direction, and a transfer space in which the battery cell is movable exists between the first folding processing tool and the second folding processing tool.

The folding tool assembly may be transferable in the second direction so that the first folding processing tool is disposed in a first folding position corresponding to a transfer area in which the battery cell is transferred or the second folding processing tool is disposed at a second folding position corresponding to the transfer area, the folding of the sealing portion of the first battery cell may be performed in a state in which the first folding processing tool is disposed at the first folding position, and the folding of the sealing portion of the second battery cell may be performed in a state in which the second folding processing tool is disposed at the second folding position.

The folding tool assembly may be transferable in the second direction so that the transfer space is disposed at a transfer position corresponding to a transfer area in which the battery cell is transferred, and the transferring of the first battery cell and the second battery cell and the subsequently transferring of the second battery cell may be performed in a state in which the folding tool assembly is disposed at the transfer position.

### BRIEF DESCRIPTION OF DRAWINGS

The above and other aspects, features, and advantages of the present disclosure will be more clearly understood from the following detailed description taken in conjunction with the accompanying drawings, in which:
FIG. 1 is a schematic diagram illustrating a shape of a pouch-type battery cell that is not subj ected to folding processing;
FIG. 2 is an illustrative diagram sequentially illustrating an example of a shape change of the sealing portion along line I-I' of FIG. 1 when the sealing portion of the pouch-type battery cell illustrated in FIG. 1 is folded;
FIG. 3 is a perspective view of a folding processing apparatus according to one embodiment of the present disclosure;
FIG. 4 is a front view of a folding tool assembly illustrated in FIG. 3 viewed in a "V" direction in FIG. 3;
FIGS. 5A to 5C illustrate various positions of the folding tool assembly, in which FIG. 5A illustrates a state in which the folding tool assembly is disposed in a first folding position, FIG. 5B illustrates a state in which the folding tool assembly is disposed at a transfer position, and FIG. 5C illustrates a state in which the folding tool assembly is disposed at a second folding position;
FIGS. 6A and 6B illustrate an operating state of the folding tool assembly, in which FIG. 6A illustrates a process of folding a sealing portion of a first battery cell in the first folding position, and FIG. 6B illustrates a process of folding a sealing portion of a second battery cell in the second folding position;
FIGS. 7A to 7H are illustrative diagrams sequentially illustrating a process of folding sealing portions of a plurality of battery cells;
FIGS. 8A to 8D are illustrative diagrams sequentially illustrating an operating state of a battery cell manufacturing apparatus according to another embodiment of the present disclosure; and
FIGS. 9A to 9D are illustrative diagrams sequentially illustrating an operating state of a battery cell manufacturing apparatus according to a comparative example.

### DETAILED DESCRIPTION

Hereinafter, various embodiments of the present disclosure will be described in detail with reference to the accompanying drawings. At this time, it is noted that like reference numerals denote like elements in appreciating the drawings. Moreover, detailed descriptions related to well-known functions or configurations are not necessarily provided in order not to obscure the subject matter of the present disclosure. Based on the same reason, it is to be noted that some components shown in the drawings are exaggerated, omitted or schematically illustrated, and the size of each component does not exactly reflect its real size.

In addition, terms including ordinal numbers such as "first" and "second" used herein may be used to describe various components, but the components are not limited by the terms, and the terms are only used for the purpose of distinguishing one component from another. For example, a first component may be named a second component and the second component may also be similarly named the first component.

Conventionally, while the battery cell is transferred inside a folding device, the sealing portion is folded and molded. The folding processing time needs time to produce a stable seal. Therefore, the transfer time of the battery cell by the cell transfer device needs to be increased. However, in this case, the time during which the battery cells are transferred increases, and thus, a tact time and a cycle time also increase in subsequent processes.

Korean Patent Publication No. 10-2240008 described a method of folding a sealing portion of a battery cell by transferring a folding device while the transfer of the battery cell by a cell transfer device is stopped in order to temporally separate the transfer and folding processes of the battery cell.

However, the present disclosure recognized that, when the cell transfer device is driven again (after stopping the battery cell transfer in order for the sealing portion to be folded) to transfer the battery cell, the folding device is located on a traveling path of the battery cell and interferes with movement of the battery cell out of the folding device. Therefore, in order to transfer the battery cell after the folding processing is completed, not only is an operation of separating the folding device from the battery cell necessary, but also the folding device needs to return to an initial position in order to perform subsequent folding on the sealing portion of the battery cell.

Accordingly, there is a limit to decreasing a working time to fold the sealing portion of the battery cell, making for a limited time to make a stable folding without decreasing production quantity. In this context, the present disclosure as described in the various embodiments below arises.

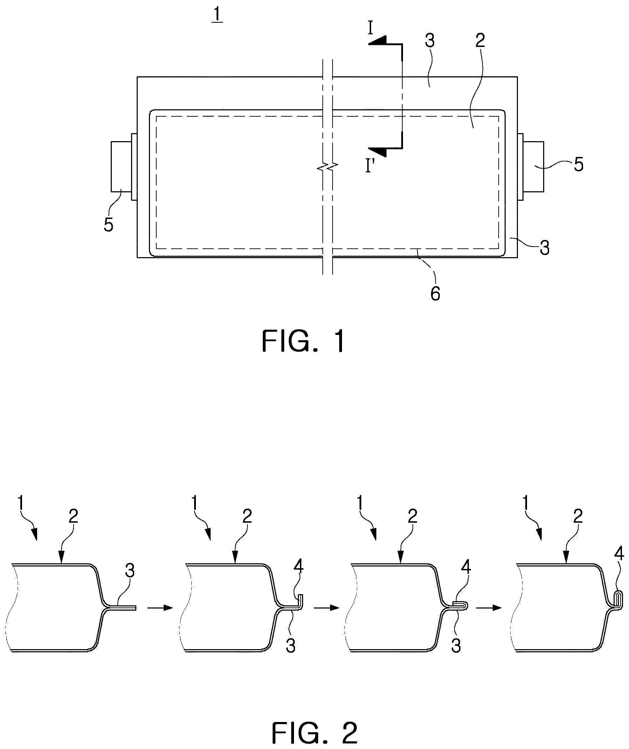

First, a pouch-type battery cell 1 according to an embodiment of the present disclosure is described below with reference to FIGS. 1 and 2.

FIG. 1 is a schematic diagram illustrating a shape of a pouch-type battery cell 1 that is not subjected to folding processing, and FIG. 2 is an illustrative diagram sequentially illustrating an example of a shape change of the sealing portion 3 along line I-I' of FIG. 1 when the sealing portion 3 of the pouch-type battery cell 1 illustrated in FIG. 1 is folded.

Referring to FIG. 1, a pouch-type battery cell 1 has a cell body 2 that accommodates an electrode assembly 6 therein, and a sealing portion 3 that seals at least a part of a circumference of the cell body 2 to block the electrode assembly 6 from the outside. The sealing portion 3 may be formed on an externally exposed portion of the cell body 2 and has a flange shape. An electrode lead 5 is connected to the electrode assembly 6, and the electrode lead 5 is exposed externally through a part of the sealing portion 3.

In the pouch-type battery cell 1 illustrated in FIG. 1, an example is illustrated in which one film casing is folded to form a cell body 2 and the sealing portion 3. In this case, the sealing portion 3 may be formed on three surfaces (upper side and left and right sides of the cell body in FIG. 1) of the cell body 2.

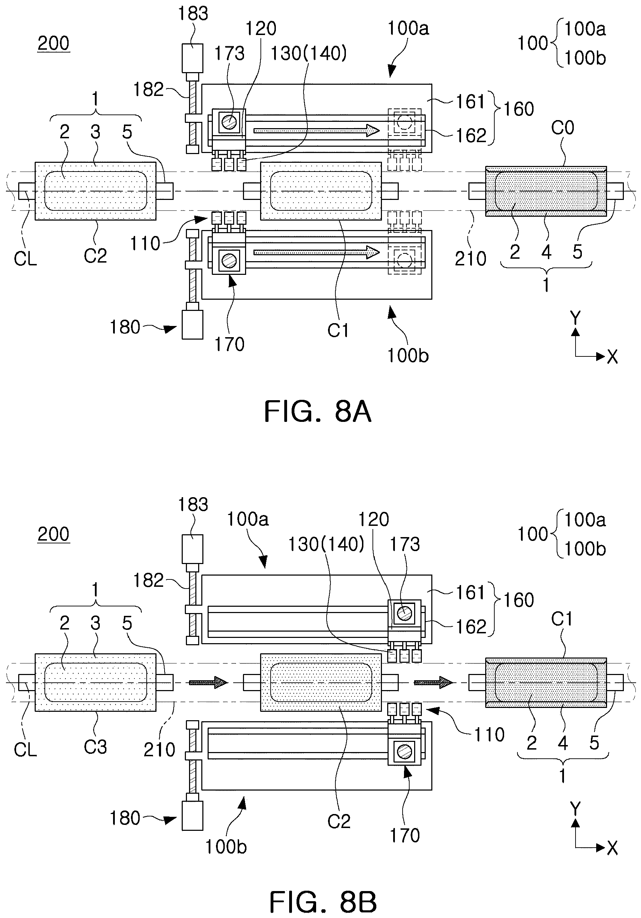

However, the structure of the sealing portion 3 of the pouch-type battery cell 1 of present disclosure is not limited thereto. For example, in the pouch-type battery cell 1, two film casings may be folded to form the cell body 2 and the sealing portion 3. In this case, the sealing portion 3 may be formed on four surfaces of the cell body 2 (e.g., see the shape of the sealing portion in FIGS. 8A to 8D).

At least some of the plurality of sealing portions 3 may have a shape folded at least once. For example, the sealing portion 3 positioned in a portion in which the electrode lead 5 is not disposed may have a shape folded at least once. That is, the sealing portion 3 may be subjected to the folding processing to increase the bonding reliability of the sealed portion and to minimize a volume occupied by the sealing portion 3.

Referring to FIG. 2, the sealing portion 3 of the pouch-type battery cell 1 has an angle of 0° (from the horizontal depicted in FIG. 2) before the sealing portion 3 is subjected to a folding processing, and has the folded structure 4 folded at a specific angle by being subjected to the folding process at least once. For example, the sealing portion 3 may have a folded structure 4 folded about 90° in a first folding process and a folded structure 4 again folded about the 90° position to be folded 180° in a second folding process (as shown in the third stage in FIG. 2) . In addition, the sealing portion 3 may have a folded structure 4 that is additionally folded 90° and folded 270° in a third folding process (as shown in the fourth stage in FIG. 2) . Finally, the sealing portion 3 may be positioned adjacent to a side wall of the cell body 2.

In one embodiment of the present disclosure, the folding processing of the sealing portion 3 may correspond to any one of the first to third folding processes described above. However, in the present disclosure, the folding processing of the sealing portion 3 is not limited to a process of folding the sealing portion 3 at specific angles such as 90°, 180°, and 270°. For example, in other embodiments of the present disclosure, the folding process may be configured as a process of folding the sealing portion 3 at various angles such as 30°, 45°, 60°, 75°, and 120°. The number of times that the folding process is performed may also variously change to one or more times.

In this way, the setting of the folding angle for the sealing portion 3 or the number of times the folding processing is performed may change according to a final specification of the battery cell 1. In addition, the folding processing of the sealing portion 3 may be performed using at least one roller, but the present disclosure is not limited thereto, and other devices such as for example a folding mold may be used. For example, an opening for molding having a shape in which the folding angle gradually changes in response to the folding angle of the sealing portion 3 may be formed inside the folding mold, and the sealing portion 3 may pass through the opening for molding, so that the folding structure may be formed in the sealing portion 3.

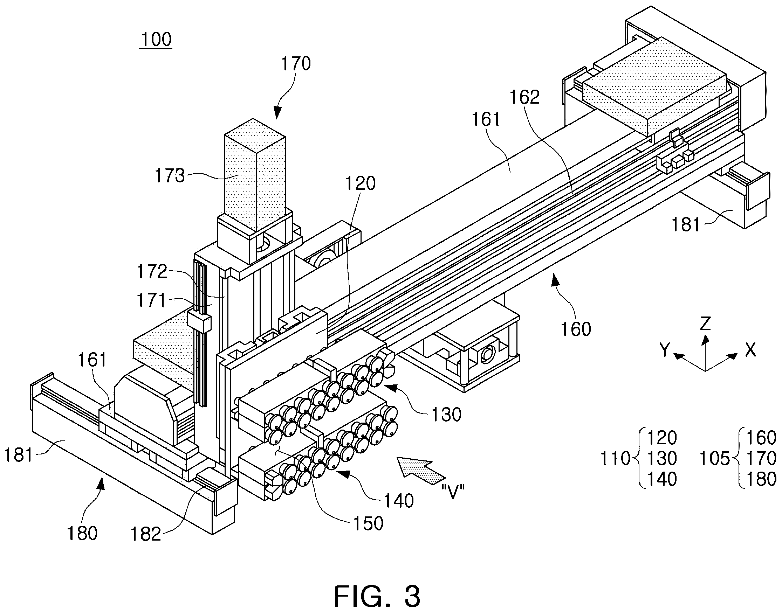

Next, a folding processing apparatus 100 according to one embodiment of the present disclosure will be described with reference to FIG. 3 together with FIGS. 1 and 2. FIG. 3 is a perspective view of the folding processing apparatus 100 according to one embodiment of the present disclosure.

The folding processing apparatus 100 according to this embodiment may include a folding tool assembly 110 for folding the sealing portion 3 of the battery cell 1 and an assembly transferring tool 105 for transferring the folding tool assembly 110.

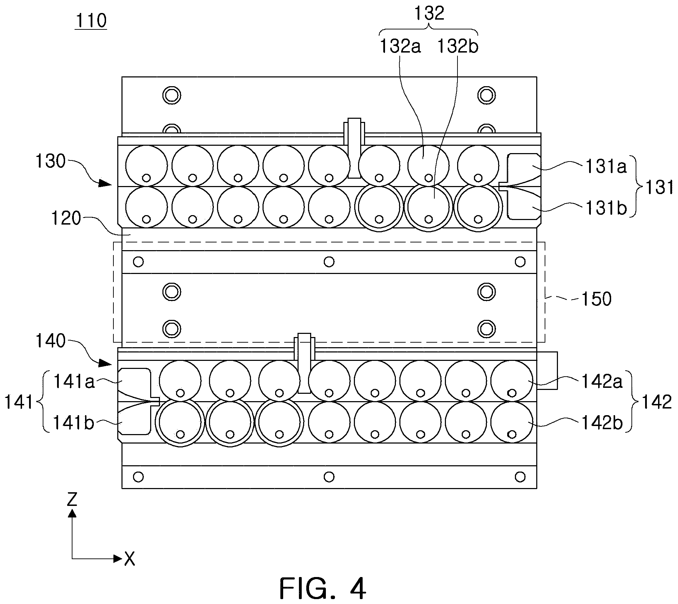

The folding tool assembly 110 may include a first folding processing tool 130 which folds the sealing portion 3 of the battery cell 1 when transferred in a forward direction +X of a first direction X, a second folding processing tool 140 which folds the sealing portion 3 of the battery cell 1 when transferred in an opposite direction -X to the forward direction +X, and a mounting plate 120 (illustratively shown extending in the Z direction) on which the first folding processing tool 130 and the second folding processing tool 140 are mounted. The first folding processing tool 130 and the second folding processing tool 140 are spaced apart from each other, and a transfer space 150 in which the battery cell 1 is transferred exists between the first folding processing tool 130 and the second folding processing tool 140. A detailed configuration of the folding tool assembly 110 will be described later with reference to FIG. 4.

The assembly transferring tool 105 may be configured to transfer the folding tool assembly 110 in various directions including the first direction X. For example, the assembly transferring tool 105 may transfer the folding tool assembly 110 in the first direction X and a second direction Z. In this case, the assembly transferring tool 105 may include a first transferring tool 160 transferring the folding tool assembly 110 in the first direction X, and a second transferring tool 170 transferring the folding tool assembly 110 in the second direction Z.

In one example, the folding tool assembly 110 may be mounted on the second transferring tool 170, and the second transferring tool 170 may be mounted on the first transferring tool 160.

The first transferring tool 160 may be configured to transfer the folding tool assembly 110 in the forward direction +X and reverse direction -X of the first direction X. In this specification, the first direction X is defined as a term that includes both forward direction +X and reverse direction -X. The first transferring tool 160 may transfer the folding tool assembly 110 in the first direction X by way of the second transferring tool 170 to which the folding tool assembly 110 is mounted. The first transferring tool 160 may perform the folding processing on the sealing portion 3 of the battery cell 1 while transferring the folding tool assembly 110 in the forward direction +X of the first direction X, and perform the folding processing on a sealing portion 3 of another battery cell 1 while transferring the folding tool assembly 110 in the reverse direction -X of the first direction X.

The first transferring tool 160 may include a first base 161 on which the second transferring tool 170 is mounted and a first guide 162 provided on the first base 161 to guide the second transferring tool 170 in the first direction X. In one example, the first guide 162 may be configured to include one or more guide rails extending in the first direction X. In order to stably guide the transfer of the second transferring tool 170, the number of first guides 162 may be two or more. The first transferring tool 160 may include a first driving tool for transferring the second transferring tool 170 and the folding tool assembly 110 mounted thereon in the first direction X. As the first driving tool, various linear movement devices for linearly moving the folding tool assembly 110 in the first direction X may be used. For example, the first driving tool may be comprised of a linear motor, a hydraulic/pneumatic cylinder, or as the first driving tool, a device that converts rotational force of the motor into movement may be used.

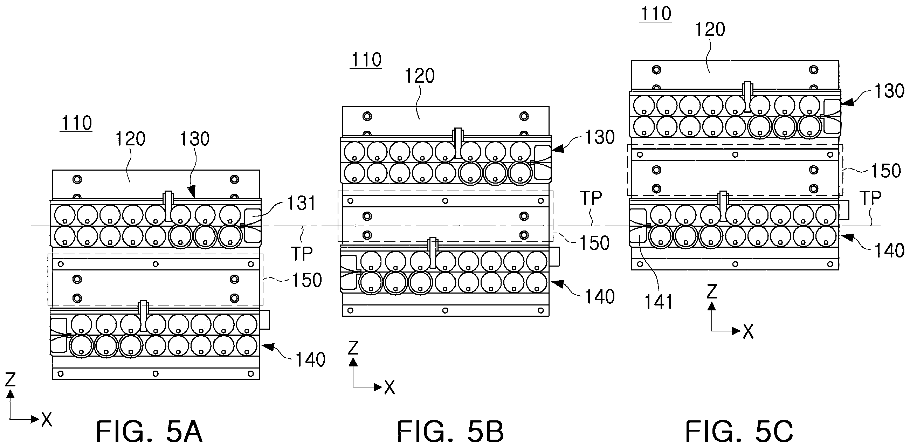

The folding tool assembly 110 may be mounted on the second transferring tool 170. In this case, the folding tool assembly 110 may be transferred in the second direction Z according to the driving of the second transferring tool 170. The second transferring tool 170 may drive the folding tool assembly 110 in the second direction Z to dispose the folding tool assembly 110 in a folding position (see FIGS. 5A and 5C) for folding the sealing portion 3 or in the transfer position (see FIG. 5B) for transferring the folded battery cell 1.

The second transferring tool 170 includes a second base 171 on which the folding tool assembly 110 is mounted, a second guide 172 guiding the transfer of the folding tool assembly 110 in the second direction Z, and a second driving tool 173 providing driving force for the transfer of the folding tool assembly 110 in the second direction Z. The second guide 172 may include at least one guide rail for guiding the transfer of the folding tool assembly 110. As the second driving tool 173, various linear movement devices for linearly moving the folding tool assembly 110 in the second direction Z may be used. For example, the second driving tool 173 may be configured as a hydraulic/pneumatic cylinder. Alternatively, the second driving tool 173 may be comprised of a linear motor, or as the second driving tool 173, a device for converting the rotational force of the motor into linear movement may be used.

As described above, the folding tool assembly 110 may be mounted on the second transferring tool 170, and the second transferring tool 170 may be mounted on the first transferring tool 160. In this case, the first transferring tool 160 may simultaneously transfer the folding tool assembly 110 and the second transferring tool 170 in the first direction X. Since the first transferring tool 160 has a width larger than that of the folding tool assembly 110 in the first direction X and the transfer amount in the first direction X is larger than that in the second direction Z, the first transferring tool 160 would typically have a weight and volume larger than those of the second transferring tool 170. Therefore, as illustrated in FIG. 3, in the case where the folding tool assembly 110 is configured to be directly mounted on the second transferring tool 170, when the folding tool assembly 110 is transferred in the first direction X and the second direction Z, the first transferring tool 160 having the large weight and volume may remain stationary. Therefore, power required to transfer the folding tool assembly 110 in the first direction X may be reduced, and the transfer control of the folding tool assembly 110 may be more easily performed.

The assembly transferring tool 105 may further include a third transferring tool 180 transferring the folding tool assembly 110 in a third direction Y perpendicular to the first direction X and the second direction Z, respectively. For example, the third transferring tool 180 transfers and drives the first transferring tool 160 in the third direction Y, so that the second transferring tool 170 mounted on the first transferring tool 160 and the folding tool assembly 110 mounted on the second transferring tool 170 may be transferred simultaneously. That is, the third transferring tool 180 may simultaneously transfer the folding tool assembly 110, the first transferring tool 160, and the second transferring tool 170 in the third direction Y.

The position where the folding processing occurs in the third direction Y may change according to the size of the battery cell 1, the width of the sealing portion 3, a position of a base line of the folding processing, and the like. Accordingly, the third transferring tool 180 may transfer the folding tool assembly 110 in the third direction Y so that the folding tool assembly 110 is disposed at the proper folding processing position in the third direction Y.

The third transferring tool 180 may include a third base 181 on which the first transferring tool 160 is mounted and a third guide 182 provided on the third base 181 to guide the first transferring tool 160 to be transferred in the third direction Y. In one example, the third guide 182 may be configured to include one or more guide rails extending in the third direction Y. In order to stably guide the transfer of the third transferring tool 180, the number of third guides 182 may be two or more. The third transferring tool 180 may include a third driving tool for transferring the first transferring tool 160 and the folding tool assembly 110 mounted thereon in the third direction Y. As the third driving tool, various linear movement devices for linearly moving the folding tool assembly 110 in the third direction Y may be used. For example, the third driving tool may be comprised of a linear motor, a hydraulic/pneumatic cylinder, or as the first driving tool, a device that converts rotational force of the motor into linear movement may be used.

The mutual coupling relationship between the folding tool assembly 110 for transferring the folding tool assembly 110 in the first direction X, the second direction Z, and/or the third direction Y, the first transferring tool 160, the second transferring tool 170, and the third transferring tool 180 is not limited to the configuration illustrated in FIG. 3, and may change as needed to accommodate the folding and sealing.

Next, the folding tool assembly 110 will be described with reference to FIG. 4. FIG. 4 is a front view of the folding tool assembly 110 illustrated in FIG. 3 viewed in a "V" direction in FIG. 3.

The folding tool assembly 110 according to the one embodiment of the present disclosure may include a first folding processing tool 130, a second folding processing tool 140, and a mounting plate 120.

The first folding processing tool 130 is configured to fold a sealing portion (e.g., sealing portion 3 in FIG. 1) of a battery cell (e.g., battery cell 1 in FIG. 1) when the first folding processing tool 130 is transferred in the forward direction +X in the first directions X.

The first folding processing tool 130 may include a first folding tool 132 folding the sealing portion 3 of the battery cell 1 at a preset angle when transferred in the forward direction +X. As described with reference to FIG. 2, the first folding tool 132 may perform the folding processing on the sealing portion 3 at an angle of 0° to 90°, the folding processing at an angle of 90° to 180°, or the folding processing at an angle of 180° to 270°. The first folding tool 132 may include a plurality of sub-folding tools to perform the folding processing on the sealing portion 3 at an angle of 0° to 270°. However, the folding angle of the first folding tool 132 is not limited thereto, and may change as needed to accommodate the folding and sealing. For example, the first folding tool 132 may perform the folding processing on the sealing portion 3 from an arbitrary angle to an arbitrary angle larger than the arbitrary angle.

The first folding tool 132 may be comprised of various devices for performing the folding, and may be configured to implement various folding angles. In one example, the first folding tool 132 may include a plurality of first roller pairs (132a and 132b) disposed in pairs to be opposite to each other in the second direction Z. Each of the first roller pairs (132a and 132b) may include the first roller 132a and the second roller 132b disposed opposite each other in the second direction Z. The sealing portion 3 may be folded at a preset angle by being pressed between the first roller 132a and the second roller 132b. The plurality of first roller pairs (132a and 132b) may gradually change the folding angle of the battery cell 1. For example, when the sealing portion 3 is subjected to a folding processing at an angle of 0° to 90° using eight first roller pairs (132a and 132b), the plurality of first roller pairs (132a and 132b) may have a shape in which the folding angle gradually increases from a first roller pair on an inlet side where the sealing portion 3 enters toward a first roller pair on an outlet side where the sealing portion 3 is discharged. Since the configuration of gradually folding the sealing portion 3 using the plurality of roller pairs is generally known, a detailed description thereof is omitted.

Meanwhile, the first folding tool 132 is not limited to the configuration of the roller pairs opposite to each other, and may have a configuration including one roller and a guide plate, and may have a configuration including a folding mold provided with an opening for molding in which the folding angle changes.

The first folding processing tool 130 may further include a first guiding tool 131 disposed in the tip of the first folding tool 132 in the forward direction +X to guide the sealing portion 3 of the battery cell 1 to the first folding tool 132. The first guiding tool 131 may have a shape in which an inlet side where the sealing portion 3 enters may have a wider shape than an outlet side where the sealing portion 3 is discharged. In one example, the first guiding tool 131 may include an upper guide 131a and a lower guide 131b.

The second folding processing tool 140 is configured to fold the sealing portion 3 of the battery cell 1 when transferred in the reverse direction -X that is opposite to the forward direction +X in the first directions X. The second folding processing tool 140 is configured opposite to the first folding processing tool 130 in only the transfer direction, and has a shape symmetrical with respect to a plane perpendicular to the first direction X.

The second folding processing tool 140 may include a second folding tool 142 folding the sealing portion 3 of the battery cell 1 at a preset angle when transferred in the reverse direction -X. As described with reference to FIG. 2, the second folding tool 142 may perform the folding processing on the sealing portion 3 at an angle of 0° to 90°, the folding processing at an angle of 90° to 180°, or the folding processing at an angle of 180° to 270°. The second folding tool 142 may include a plurality of sub-folding tools to perform the folding processing on the sealing portion 3 at an angle of 0° to 270°. However, the folding angle of the second folding tool 142 is not limited thereto, and may change as needed to accommodate the folding and sealing. For example, the second folding tool 142 may perform the folding processing on the angle of the sealing portion 3 from an arbitrary angle to an arbitrary angle larger than the arbitrary angle.

The second folding tool 142 may be comprised of various devices for performing the folding, and may be configured to implement various folding angles. In one example, the second folding tool 142 may include a plurality of second roller pairs (142a and 142b) disposed in pairs opposite to each other in the second direction Z. Each of the second roller pairs (142a and 142b) may include a third roller 142a and a fourth roller 142b disposed opposite to each other in the second direction Z. The sealing portion 3 may be folded at a preset angle by being pressed between the third roller 142a and the fourth roller 142b. The plurality of second roller pairs (142a and 142b) may gradually change the folding angle of the battery cell 1. For example, when the sealing portion 3 is subjected to a folding processing at an angle of 0° to 90° using eight second roller pairs (142a and 142b), the plurality of second roller pairs 142a and 142b may have a shape in which the folding angle gradually increases from the second roller pair on the inlet side where the sealing portion 3 enters toward the second roller pair on the outlet side where the sealing portion 3 is discharged. Since the configuration of gradually folding the sealing portion 3 using the plurality of roller pairs is generally known, a detailed description thereof is omitted.

Meanwhile, the second folding tool 142 is not limited to the configuration of the roller pairs opposite to each other, and may have a configuration including one roller and a guide plate, and may have a configuration including a folding mold provided with an opening for molding in which the folding angle changes.

The second folding processing tool 140 may further include a second guiding tool 141 disposed in the tip of the second folding tool 142 in the reverse direction -X to guide the sealing portion 3 of the battery cell 1 to the second folding tool 142. The second guiding tool 141 may have a shape in which the inlet side where the sealing portion 3 enters may have a wider shape than the outlet side where the sealing portion 3 is discharged. In one example, the second guiding tool 141 may include an upper guide 141a and a lower guide 141b.

The first folding processing tool 130 and the second folding processing tool 140 may be mounted on the mounting plate 120 in a fixed state. Therefore, by transferring the mounting plate 120, the first folding processing tool 130 and the second folding processing tool 140 may be transferred together. The first folding processing tool 130 and the second folding processing tool 140 may be disposed on the mounting plate 120 at intervals in the second direction Z perpendicular to the first direction X. Accordingly, the transfer space 150 in which the battery cell 1 may move may be formed between the first folding processing tool 130 and the second folding processing tool 140.

FIGS. 5A to 5C illustrate various positions of the folding tool assembly 110, in which FIG. 5A illustrates a state in which the folding tool assembly 110 is disposed in a first folding position, FIG. 5B illustrates a state in which the folding tool assembly 110 is disposed at a transfer position, and FIG. 5C illustrates a state in which the folding tool assembly 110 is disposed at a second folding position. In the folding tool assembly 110 illustrated in FIGS. 5A to 5C, the height of the second direction Z is different at each position.

The folding tool assembly 110 may be transferred in the second direction Z by the second transferring tool (170 in FIG. 3). Accordingly, the folding tool assembly 110 may have a first folding position illustrated in FIG. 5A, a transfer position illustrated in FIG. 5B and a second folding position illustrated in FIG. 5C.

In the first folding position illustrated in FIG. 5A, the folding tool assembly 110 may be positioned on a transfer plane where a battery cell (e.g., battery cell 1 in FIG. 1) is transferred, that is, a position corresponding to a transfer area TP. In the first folding position, a sealing portion (e.g., sealing portion 3 in FIG. 1) of the battery cell 1 may be guided by the first guiding tool 131. That is, the first folding position corresponds to a position where the sealing portion 3 of the battery cell 1 may enter the first guiding tool 131.

In the transfer position illustrated in FIG. 5B, the folding tool assembly 110 may be disposed at a position where the transfer space 150 corresponds to the transfer area TP. In the transfer position, the battery cell 1 may be transferred in the first direction X through the transfer space 150 formed between the first folding processing tool 130 and the second folding processing tool 140. That is, in the transfer position, the first folding processing tool 130 and the second folding processing tool 140 are not positioned on a traveling path of the battery cell 1, so the battery cell 1 may be transferred without interfering with the first folding processing tool 130 and the second folding processing tool 140.

In the second folding position illustrated in FIG. 5C, the folding tool assembly 110 may be disposed at a position where the second folding processing tool 140 corresponds to the transfer area TP. In the second folding position, the sealing portion 3 of the battery cell 1 may be guided by the second guiding tool 141. That is, the second folding position corresponds to a position where the sealing portion 3 of the battery cell 1 may enter the second guiding tool 141.

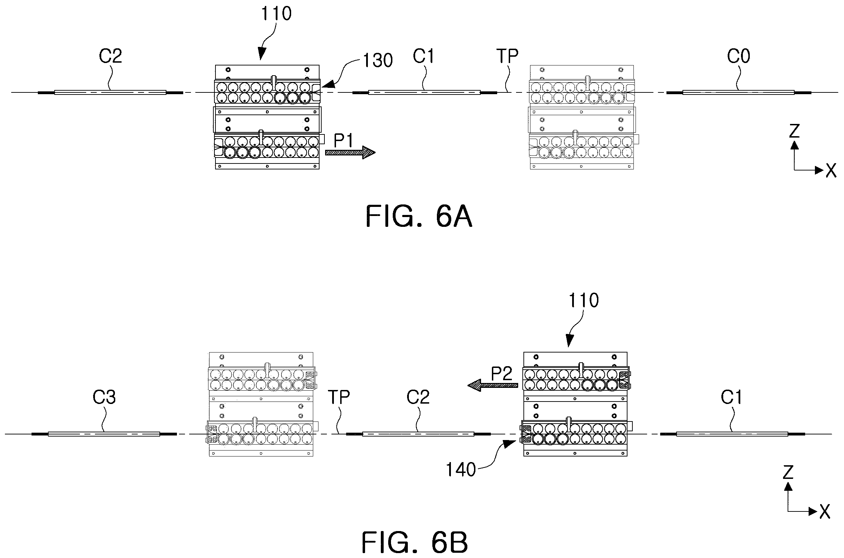

FIGS. 6A and 6B illustrate an operating state of the folding tool assembly 110, in which FIG. 6A illustrates a process of folding a sealing portion (e.g., sealing portion 3 in FIG. 1) of a first battery cell C1 in the first folding position, and FIG. 6B illustrates a process of folding the sealing portion 3 of a second battery cell C2 in the second folding position.

In FIG. 6A, the folding tool assembly 110 may be disposed at the first folding position to perform the folding processing on the sealing portion 3 of the first battery cell C1 with the first folding processing tool 130. The folding tool assembly 110 may fold the sealing portion 3 of the first battery cell C1 with the first folding processing tool 130 while the folding tool assembly 110 is moved in the forward directions P1 and +X from an initial position on the left side in the first folding position.

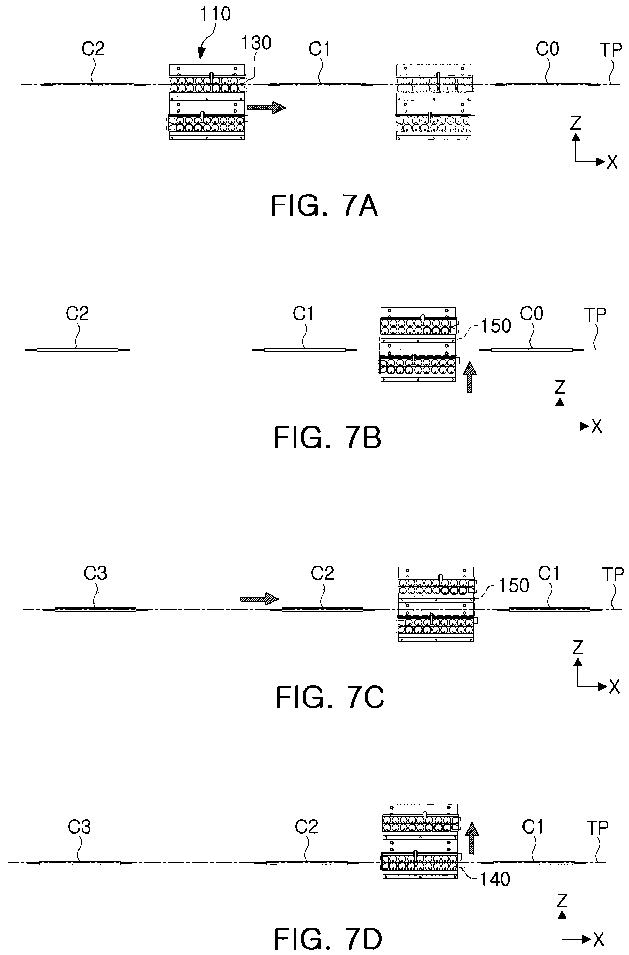

After the folding is completed in the first folding position, the plurality of battery cells C0, C1, and C2 including the first battery cell C1 are transferred in the forward direction +X of the first direction X, which is the transfer direction of the battery cell 1 (see FIG. 7C).

In FIG. 6B, the folding tool assembly 110 may be disposed at the second folding position to perform the folding processing on the sealing portion 3 of the second battery cell C2 with the second folding processing tool 140. The folding tool assembly 110 performs the folding processing on the sealing portion 3 of the second battery cell C2 subsequent to the first battery cell C1 while the folding tool assembly 110 is transferred in the reverse directions P2 and -X on the right side from the second folding position and returning to the initial position.

Next, the process of folding the sealing portion (e.g., sealing portion 3 in FIG. 1) of the battery cells C1 and C2 will be described in more detail with reference to FIGS. 7A to 7H. FIGS. 7A to 7H are diagrams illustrating a series of processes of folding sealing portions 3 of the plurality of battery cells C1 and C2. The arrows on each of FIGS. 7A to 7H show the component movement to occur for each drawing.

A plurality of battery cells C0, C1, C2, C3, and C4 are illustrated in FIGS. 7A to 7H, and in the plurality of battery cells, based on the transfer direction, a battery cell disposed in front is indicated as C0, and battery cells subsequent thereto are indicated as C1, C2, C3, C4, etc., respectively.

In FIG. 7A, the battery cell C0 is in a state in which the folding processing on the sealing portion 3 has been completed, and in the first battery cell C1 and the second battery cell C2, the folding processing has not been performed on the sealing portion 3.

In FIG. 7A, the folding tool assembly 110 is disposed at the first folding position for performing the folding processing on the sealing portion 3 with the first folding processing tool 130. When the folding tool assembly 110 is transferred from the initial position to the forward direction +X of the first direction X in a state in which the transfer of the plurality of battery cells C0, C1, and C2 is stopped, the sealing portion 3 of the first battery cell C1 is subjected to the folding processing.

In order to discharge the first battery cell C1, in which the sealing portion 3 has been folded, in the transport direction +X of the battery cell, as illustrated in FIG. 7B, the folding tool assembly 110 is transferred upward in the second direction Z so that the folding tool assembly 110 is disposed at the transfer position. In the transfer position, the transfer space 150 of the folding tool assembly 110 corresponds to the transfer area TP.

Next, as illustrated in FIG. 7C, in a state in which the folding tool assembly 110 is disposed at the transfer position, the plurality of battery cells C1, C2, and C3 including the first battery cell C1 are transferred in the transfer direction +X of the battery cell. Accordingly, the second battery cell C2 subsequent to the first battery cell C1 is positioned in the reverse direction -X of the folding tool assembly 110.

In order to fold the sealing portion 3 of the second battery cell C2, as illustrated in FIG. 7D, the folding tool assembly 110 is transferred upward in the second direction Z so that the folding tool assembly 110 is disposed at the second folding position. In the second folding position, the second folding processing tool 140 is disposed at a position corresponding to the second battery cell C2.

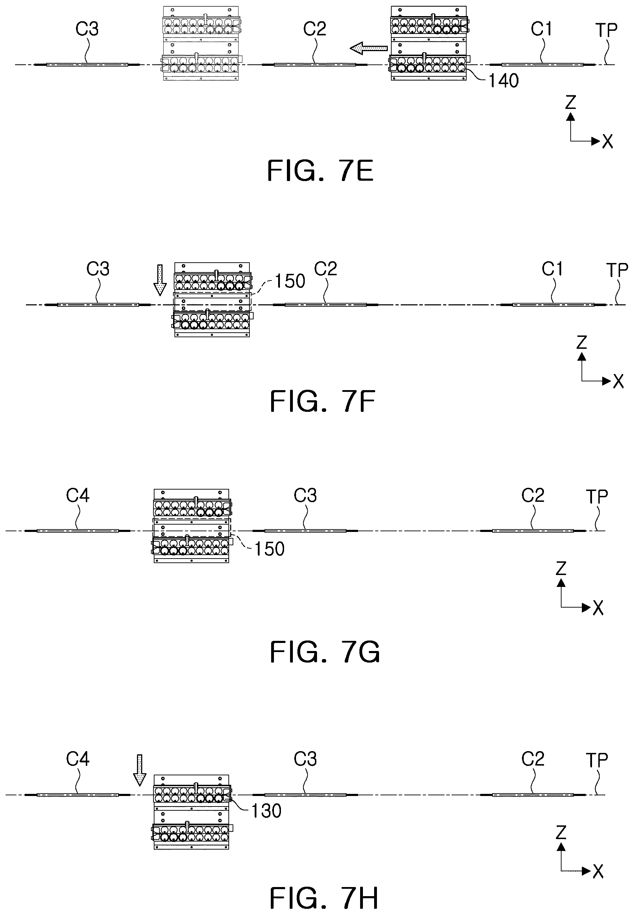

Next, as illustrated in FIG. 7E, when the folding tool assembly 110 is transferred in the reverse direction -X of the first direction X and returns to the initial position, the folding processing is performed on the sealing portion 3 of the second battery cell C2.

In order to discharge the second battery cell C2, in which the sealing portion 3 has been folded, in the transport direction +X of the battery cell, as illustrated in FIG. 7F, the folding tool assembly 110 is transferred downward in the second direction Z so that the folding tool assembly 110 is disposed at the transfer position. In the transfer position, the transfer space 150 of the folding tool assembly 110 corresponds to the transfer area TP.

Next, as illustrated in FIG. 7G, in the state in which the folding tool assembly 110 is disposed at the transfer position, the plurality of battery cells C2, C3, and C4 including the second battery cell C2 are transferred in the transfer direction +X of the battery cell. Accordingly, the third battery cell C3 subsequent to the second battery cell C2 is positioned in the forward direction +X of the folding tool assembly 110.

Next, in order to fold the sealing portion 3 of the third battery cell C3, as illustrated in FIG. 7H, the folding tool assembly 110 is transferred downward in the second direction Z so that the folding tool assembly 110 is disposed at the first folding position. In the first folding position, the first folding processing tool 130 is disposed at a position corresponding to the third battery cell C3.

Thereafter, the folding process may be performed on the sealing portion 3 of the subsequent battery cells (C3, C4, etc.) by performing operations corresponding to FIGS. 7A to 7H.

In this way, according to one embodiment of the present disclosure, not only the process of transferring the folding tool assembly 110 in the forward direction +X from the initial position, but also the process of returning the folding tool assembly 110 to the initial position by transferring the folding tool assembly 110 in the reverse direction -X may be performed, so there is an advantage that the operation speed of the folding processing remarkably increases.

Next, a battery cell manufacturing apparatus 200 according to another embodiment of the present disclosure and its operating state will be described with reference to FIGS. 8A to 8D. FIGS. 8A to 8D are illustrative diagrams sequentially illustrating the operating state of the battery cell manufacturing apparatus 200 according to this embodiment.

Referring to FIGS. 3 and 8A together, the battery cell manufacturing apparatus 200 according to one embodiment of the present disclosure may be configured to include at least one folding processing apparatus 100 and a cell transfer device 210.

As the folding processing apparatus 100, the folding processing apparatus 100 described with reference to FIGS. 3 to 7 may be used, and therefore, a detailed description of the folding processing apparatus 100 will be replaced with the descriptions of FIGS. 3 to 7 described above.

The cell transfer device 210 is configured to transfer the plurality of battery cells C0, C1, and C2 in the first direction X. As the cell transfer device 210, a conveyor device may be used as an example. The cell transfer device 210 may include a fixing tool such as a vacuum suction tool to fix the battery cell during the folding processing of the battery cell.

The cell transfer device 210 may be configured to transfer the battery cells C0, C1, and C2 in the state in which the folding tool assembly 110 is disposed at the transfer position of FIG. 5B, and the folding tool assembly 110 may be transferred in the forward direction +X or reverse direction -X in the state in which the cell transfer device 210 is stopped.

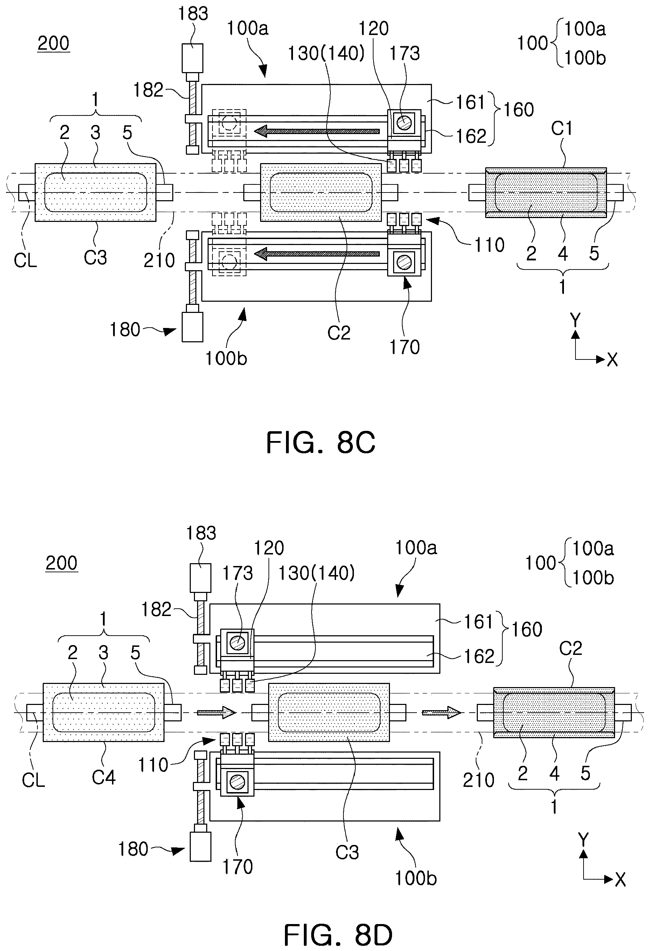

As in the embodiment illustrated in FIG. 1, when a sheet of film casing is folded to form the cell body 2, the sealing portion 3 of the pouch-type battery cell 1 may have a structure in which the sealing portion 3 is formed on three surfaces of the cell body 2 and only the sealing portion 3 formed on one surface on which the electrode lead 5 is not formed is folded. On the other hand, as illustrated in FIG. 8, when two sheets of film casings are overlapped to form the cell body 2, the sealing portion 3 of the pouch-type battery cell 1 may have a structure in which the sealing portion 3 is formed on three surfaces of the cell body 2 and only the sealing portions 3 formed on two surfaces on which the electrode lead 5 is not formed are folded.

That is, in the embodiment of FIG. 8A, the battery cells 1, C0, C1, and C2 have a structure in which the sealing portion 3 is formed on both sides of the battery cells 1, C0, C1, and C2 based on a center line CL. In order to simultaneously perform the folding processing on the sealing portion 3 formed on both sides of the battery cells1, C0, C1, and C2, the folding processing apparatus 100 may be disposed on both sides of the battery cells based on the transfer direction +X of the battery cell. That is, the folding processing apparatus 100 may include a first folding processing apparatus 100a for performing folding processing on the sealing portion 3 located on one side of the battery cells 1, C0, C1, and C2, and a second folding processing apparatus 100b for performing folding processing on the sealing portion located on the other side of the battery cell. The first folding processing apparatus 100a may have the same configuration as the folding processing apparatus 100 illustrated in FIG. 3, and the second folding processing apparatus 100b may have a shape symmetrical with respect to a plane perpendicular to the second direction Z when compared to the first folding processing apparatus 100a.

Next, referring to FIGS. 8A to 8D together with FIGS. 7A to 7H, a method of manufacturing battery cells 1, C1, and C2 according to one embodiment of the present disclosure will be described. FIGS. 8A to 8D illustrate states corresponding to main processes of FIGS. 7A to 7H.

A plurality of battery cells, such as a preceding battery cell C0, a first battery cell C1, a second battery cell C2, a third battery cell C3, and a fourth battery cell C4, may be sequentially arranged in the cell transfer device 210, and a plurality of battery cells may be simultaneously transferred according to the transfer of the cell transfer device 210. In FIG. 8A, the preceding battery cell C0 is in the state in which the folding processing of the sealing portion 3 has been completed.

The method of manufacturing battery cells 1, C1, and C2 according to one embodiment of the present disclosure may include a first folding step of folding the sealing portion 3 of the first battery cell C1, a first transfer step of transferring the plurality of battery cells CO, C1, and C2, a second folding step of folding the sealing portion 3 of the second battery cell C2, and a second transfer step of transferring a plurality of battery cells C1, C2, and C3.

Referring to FIGS. 8A and 7A together, in the first folding step, the folding tool assembly 110 folds the sealing portion 3 of the first battery cell C1 while the folding tool assembly 110 is being transferred in the forward direction +X of the first direction X from the initial position in the state in which the transfer of the first battery cell C1 is stopped. As illustrated in FIG. 7A, the first folding step may be performed in the state in which the folding tool assembly 110 is disposed in the first folding position. In the first folding position, the first folding processing tool 130 is disposed at a position corresponding to the first battery cell C1. When performing the first folding step, the cell transfer device 210 may be in a stopped state (i. e., the first battery cell C1 being folded by the folding tool assembly 110 is itself stationary).

In order to discharge the first battery cell C1, in which the sealing portion 3 has been folded, in the transport direction +X of the battery cell, as illustrated in FIG. 7B, the folding tool assembly 110 is transferred upward in the second direction Z so that the folding tool assembly 110 is disposed at the transfer position.

Next, in the first transfer step, as illustrated in FIGS. 8B and 7C, the first battery cell C1 for which the folding processing has been completed and the second battery cell C2 subsequent to the first battery cell C1 are transferred in the forward direction +X. In the first transfer step, the cell transfer device 210 is driven in a state in which the folding tool assembly 110 is disposed in the transfer position to transfer the plurality of battery cells C1, C2, and C3 including the first battery cell C1 in the transfer direction +X of the battery cell. Accordingly, the second battery cell C2 subsequent to the first battery cell C1 is positioned in the reverse direction-X of the folding tool assembly 110. The first transfer step may be performed in the state in which the folding tool assembly 110 is stopped in the transfer position.

In order to fold the sealing portion 3 of the second battery cell C2, as illustrated in FIG. 7D, the folding tool assembly 110 is transferred upward in the second direction Z so that the folding tool assembly 110 is disposed at the second folding position. In the second folding position, the second folding processing tool 140 is disposed at a position corresponding to the second battery cell C2.

Referring to FIGS. 8C and 7E together, in the second folding step, the sealing portion 3 of the second battery cell C2 may be folded while the folding tool assembly 110 is returned to the initial position by transferring the folding tool assembly 110 in the reverse direction -X (opposite to the forward direction +X) in the state in which the transfer of the second battery cell C2 is stopped. As illustrated in FIG. 7E, the second folding step may be performed in the state in which the folding tool assembly 110 is disposed in the second folding position. In the second folding position, the second folding processing tool 140 is disposed at a position corresponding to the second battery cell C2. When performing the second folding step, the cell transfer device 210 may be in a stopped state (i.e., the second battery cell C2 being folded by the folding tool assembly 110 is itself stationary).

In order to discharge the second battery cell C2, in which the sealing portion 3 has been folded, in the transport direction +X of the battery cell, as illustrated in FIG. 7F, the folding tool assembly 110 is transferred downward in the second direction Z so that the folding tool assembly 110 is disposed at the transfer position.

As shown in FIGS. 8D and 7G, in the second transfer step, the second battery cell C2 for which the folding processing has been completed and the third battery cell C3 subsequent to the second battery cell C2 are transferred in the forward direction +X. In the second transfer step, the cell transfer device 210 is driven in a state in which the folding tool assembly 110 is disposed in the transfer position to transfer the plurality of battery cells C2, C2, and C3 including the second battery cell C2 in the transfer direction +X of the battery cell. Accordingly, the third battery cell C3 subsequent to the second battery cell C2 is positioned in the forward direction +X of the folding tool assembly 110. The second transfer step may be performed in the state in which the folding tool assembly 110 is stopped in the transfer position.

Next, in order to fold the sealing portion 3 of the subsequent third battery cell C3, as illustrated in FIG. 7H, the folding tool assembly 110 is transferred downward in the second direction Z so that the folding tool assembly 110 is disposed at the first folding position. In the first folding position, the first folding processing tool 130 is disposed at a position corresponding to the third battery cell C3.

Thereafter, the folding process may be performed on the sealing portion 3 of the subsequent battery cells (C3, C4, etc.) by performing operations corresponding to FIGS. 7A to 7H and FIGS. 8A to 8D.

As described above, according to the disclosed embodiments of the present disclosure, since the folding process is not only performed on a sealing portion 3 of a battery cell in the process of transferring the folding tool assembly 110 in the forward direction +X from the initial position, but also the folding process is performed on a sealing portion 3 of a subsequent battery cell even in the process of returning to the initial position by transferring the folding tool assembly 110 in the reverse direction -X, there is an advantage in that the folding operation speed of the battery cell is improved. Accordingly, it is possible to increase the production quantity of battery cells by shortening the manufacturing time of the battery cells.

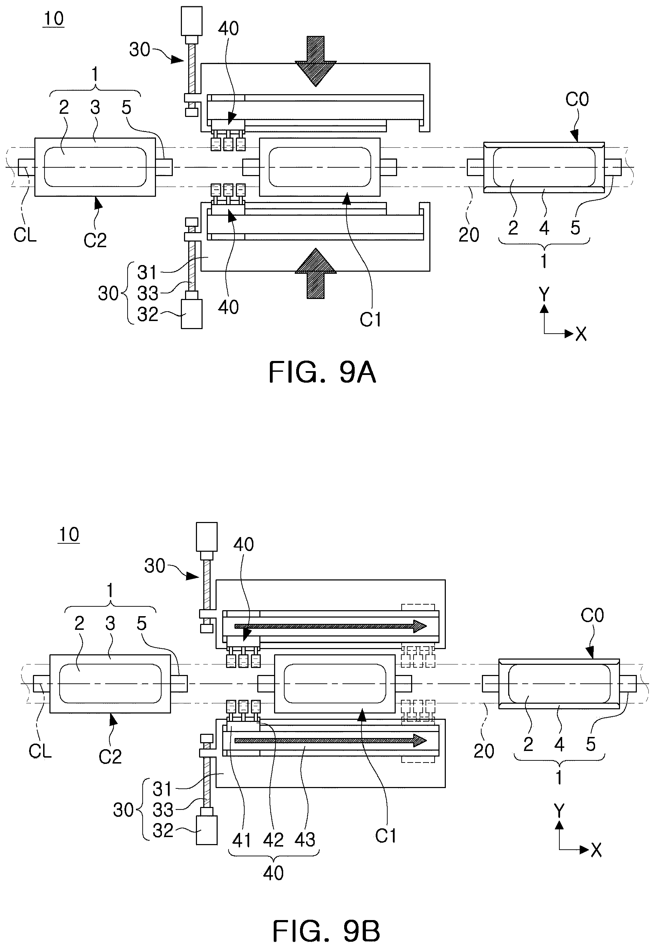

On the other hand, since a battery cell manufacturing apparatus 10 according to a comparative example illustrated in FIGS. 9A to 9D may perform the folding processing on the sealing portion 3 of the battery cell 1 only when the folding tool 40 moves in the forward direction +X, the operation speed is significantly reduced.

The battery cell manufacturing apparatus 10 according to the comparative example illustrated in FIGS. 9A to 9D may be configured to include the folding tool 40, the Y-direction driving tool 30, and the cell transfer device 20. In the folding tool 40, a folding roller 42 for folding the sealing portion 3 may be installed on the mounting table 41, and the mounting table 41 may move along the X direction on the base table 31. That is, the mounting table 41 may move in the forward direction +X and the reverse direction -X in the X direction along guide means 43 by driving means not illustrated. The Y-direction driving tool 30 may include a rotational shaft 33 rotating by a driving motor 32, and transfer the base table 31 in the Y direction by the rotation of the rotational shaft 33. That is, the Y-direction driving tool 30 may transfer the folding tool 40 in the direction in which the folding tool 40 is close to or away from the sealing portion 3 on the Y-direction based on a center line CL. The cell transfer device 20 may be comprised of a conveyor on which the plurality of battery cells are seated in order to transfer the plurality of battery cells 1, CO, C1, and C2.

Referring to FIG. 9A, the base table 31 and the folding tool 40 installed therein move to a position corresponding to the sealing portion 3 of the battery cell 1 by driving the Y-direction driving tool 30. That is, the Y-direction driving tool 30 is driven to move the folding tool 40 in a direction approaching the first battery cell C1.

Thereafter, as illustrated in FIG. 9B, when the folding tool 40 is transferred in the forward direction +X along the X direction, the sealing portion 3 of the first battery cell C1 is subjected to the folding processing by the folding roller 42.

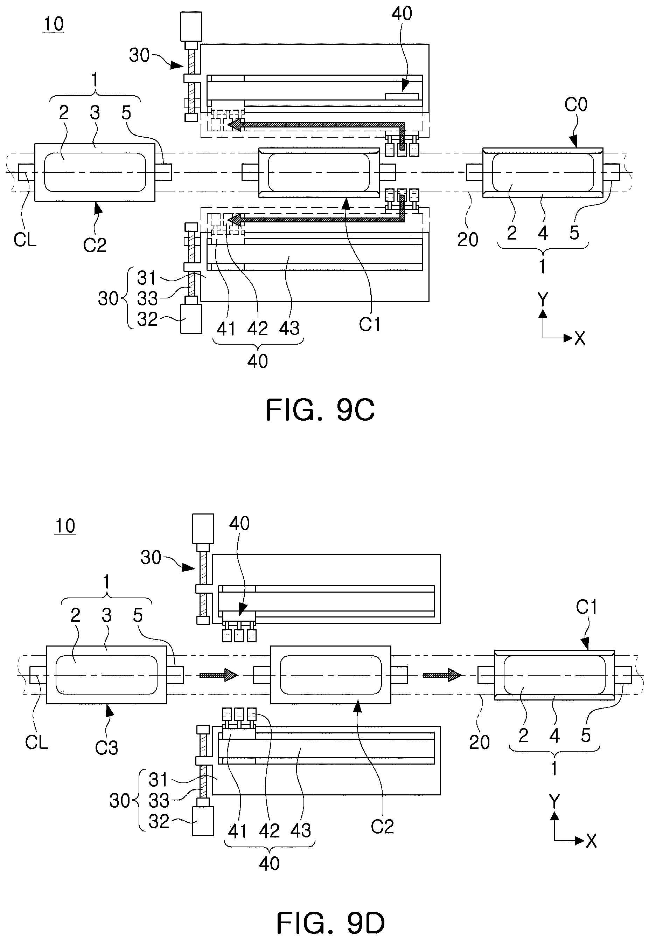

Referring to FIG. 9C, when the first battery cell C1 for which the folding processing of the sealing portion 3 is completed by transfer of folding tool 40 in the forward direction +X, the folding tool 40 is positioned on the transfer path of the first battery cell C1, so the sealing portion 3 interferes with the folding tool 40. Therefore, in order to transfer the first battery cell C1 for which the folding processing is completed, the folding tool 40 needs to be transferred in a direction away from the first battery cell C1 in the Y direction. In addition, in order to fold the sealing portion 3 of the subsequent second battery cell C2, the folding tool 40 needs to return to the initial position. Accordingly, the folding tool 40 needs to return to the original position by transferring in the reverse direction-X of the X direction after retracting in the Y direction.

FIG. 9D illustrates a state in which the folding tool 40 is retracted in the Y direction from a folding stand-by position. In the state of FIG. 9D, since the first battery cell C1 does not interfere with the folding tool 40, the first battery cell C1 may be transferred in the forward direction +X by the cell transfer device 20. Thereafter, when the processes of FIGS. 9A to 9D are repeated, the sealing portion 3 of the battery cell C2 may be folded.

In this way, according to the comparative example, the folding tool 40 may be driven in the state in which the transfer of the battery cell 1 is stopped to perform the folding process on the sealing portion 3, but the folding process may not be performed on the sealing portion 3 in the process of the folding tool 40 transferred in the revere direction -X and returning to the initial position, so it takes more time to perform the folding processing as compared to the inventive folding. Moreover, in order to transfer the battery cell 1, since the folding tool 40 needs to be retreated in the Y direction in order to avoid the interference between the folding tool 40 and the battery cell 1, more work time is required.

However, according to one embodiment of the present disclosure, since the folding processing of the sealing portion 3 is possible not only when the folding tool assembly 110 is transferred in the forward direction +X but also when the folding tool assembly 110 is transferred in the reverse direction -X, the speed of the folding processing may be greatly improved, thereby shortening the manufacturing time of the battery cell 1 and increasing the production quantity of the battery cell 1.

As set forth above, according to one embodiment of the present disclosure having such a configuration, it is possible to improve a speed of an operation of folding a sealing portion of a pouch-type battery cell, and thus, is possible to shorten a manufacturing time of the battery cell to increase a production quantity of the battery cell.

While various embodiments have been shown and described above, those skilled in the art would recognize modifications and variations from the disclosed embodiments.

For example, the various embodiments may be implemented by deleting some components from the above-described embodiments, and each embodiment may be implemented in combination with each other.

## Claims

1. A folding processing apparatus for battery cells, comprising:
a folding tool assembly including a first folding processing tool configured to fold a sealing portion of a first battery cell when the folding tool assembly is transferred forward in a first direction, a second folding processing tool disposed offset from the first folding processing tool and configured to fold a sealing portion of a second battery cell when the folding tool assembly is transferred in a reverse direction opposite to the first direction, and a mounting plate on which the first folding processing tool and the second folding processing tool are mounted; and
an assembly transferring tool configured to transfer the folding tool assembly.

2. The folding processing apparatus of claim 1, wherein the first folding processing tool and the second folding processing tool are disposed on the mounting plate offset from each other in a second direction perpendicular to the first direction, and
a transfer space in which the battery cell is movable exists between the first folding processing tool and the second folding processing tool.

3. The folding processing apparatus of claim 1 or 2, wherein the first folding processing tool includes a first folding tool configured to fold the sealing portion of the first battery cell at a preset angle when the first folding processing tool is transferred forward in the first direction, and
the second folding processing tool includes a second folding tool configured to fold the sealing portion of the second battery cell at the preset angle when the second folding processing tool is transferred in the reverse direction.

4. The folding processing apparatus of any one of claims 1 to 3, wherein the first folding tool includes a plurality of first roller pairs that are disposed in pairs opposite to each other in the second direction, and
the second folding tool includes a plurality of second roller pairs that are disposed in pairs opposite to each other in the second direction.

5. The folding processing apparatus of any one of claims 1 to 3, wherein the first folding processing tool further includes a first guiding tool that is disposed at a tip of the first folding tool in the forward direction to guide the sealing portion of the first battery cell to the first folding tool, and
the second folding processing tool further includes a second guiding tool that is disposed at a tip of the second folding tool in the reverse direction to guide the sealing portion of the second battery cell to the second folding tool.

6. The folding processing apparatus of any one of claims 2 to 5, wherein the assembly transferring tool includes a first transferring tool transferring the folding tool assembly in the first direction and a second transferring tool transferring the folding tool assembly in the second direction.

7. The folding processing apparatus of claim 6, wherein the assembly transferring tool further includes a third transferring tool configured to transfer the folding tool assembly in a third direction perpendicular to the first and second directions, respectively.

8. A battery cell manufacturing apparatus, comprising:
at least one folding processing apparatus including a folding tool assembly configured to fold a sealing portion of a battery cell and an assembly transferring tool configured to transfer the folding tool assembly; and
a cell transfer device configured to transfer a plurality of battery cells in a first direction,
wherein the folding tool assembly includes a first folding processing tool configured to fold a sealing portion of a first battery cell when the folding tool assembly is transferred forward in a first direction, a second folding processing tool configured to fold a sealing portion of a second battery cell when the folding tool assembly cell is transferred in a reverse direction opposite to the first direction, and a mounting plate on which the first folding processing tool and the second folding processing tool are mounted.

9. The battery cell manufacturing apparatus of claim 8, wherein the first folding processing tool and the second folding processing tool are disposed on the mounting plate offset from each other in a second direction perpendicular to the first direction, and
a transfer space in which the battery cell is movable exists between the first folding processing tool and the second folding processing tool.

10. The battery cell manufacturing apparatus of claim 8 or 9, wherein the folding tool assembly is configured to transfer in the first direction or the reverse direction in a state in which the cell transfer device is stopped.

11. The battery cell manufacturing apparatus of any one of claims 8 to 10, wherein the folding tool assembly is transferable in the second direction so that the first folding processing tool is disposed in a first folding position corresponding to a transfer area in which the first battery cell is transferred or the second folding processing tool is disposed at a second folding position corresponding to the transfer area,
the folding tool assembly is configured to fold the sealing portion of the first battery cell by the first folding processing tool while the folding tool assembly is transferred from an initial position forward in the first direction in the first folding position, and
the folding tool assembly is configured to fold a sealing portion of the second battery cell subsequent to the first battery cell while the folding tool assembly is transferred in the reverse direction and returned to the initial position.

12. The battery cell manufacturing apparatus of any one of claims 9 to 11, wherein the folding tool assembly is transferable in the second direction so that the transfer space is disposed at a transfer position corresponding to a transfer area in which the second battery cell is transferred, and
the cell transfer device is configured to transfer the second battery cell in a state in which the folding tool assembly is disposed at the transfer position.

13. The battery cell manufacturing apparatus of any one of claims 8 to 12, wherein the folding processing apparatus is disposed on both sides of the battery cell, respectively, based on a transfer direction of the battery cell.

14. A battery cell manufacturing method, comprising:
folding a sealing portion of a first battery cell while transferring a folding tool assembly from an initial position forward in a first direction in a state in which a transfer of the first battery cell is stopped;
transferring the first battery cell and a second battery cell subsequent to the first battery cell forward in the first direction;
folding a sealing portion of the second battery cell while transferring the folding tool assembly in a reverse direction opposite to the first direction from the second folding position and returning to the initial position in a state in which a transfer of the second battery cell is stopped; and
subsequently transferring the second battery cell forward in the first direction.

15. The battery cell manufacturing method of claim 14, wherein the folding tool assembly includes a first folding processing tool which folds the sealing portion of the battery cell when the folding tool assembly is transferred forward in the first direction, a second folding processing tool which folds the sealing portion of the battery cell when the folding tool assembly is transferred in the reverse direction opposite to the first direction, and a mounting plate on which the first folding processing tool and the second folding processing tool are mounted,
the first folding processing tool and the second folding processing tool are disposed on the mounting plate offset from each other in a second direction perpendicular to the first direction, and
a transfer space in which the battery cell is movable exists between the first folding processing tool and the second folding processing tool.
